# EUROPEAN PATENT APPLICATION

(11) **EP 4 147 573 A1**
(43) Date of publication of application: **15.03.2023**
(21) Application number: 22195195.7
(22) Date of filing: 12.09.2022
(51) Int. Cl.: A01N 25/34, A01N 33/12, A01N 55/00, A01N 31/02, A01P 1/00, B60N 3/04

(54) **SANITIZING COVERS FOR ARTICLES**

(30) Priority: 13.09.2021 US 202117473138
(71) Applicant: Goodrich Corporation, Charlotte, NC 28217-4578 (US)
(72) Inventor: PATTERSON, Melissa Leigh, North Canton, 44720 (US); ROACH, Kevin Edward, Stow, 44224 (US)
(74) Representative: Dehns

(57) **Abstract**

Disclosed herein is a mat comprising a first foam layer; and a sanitizer; where the first foam layer is saturated with the sanitizer. Disclosed herein too is a method of manufacturing a mat comprising immersing a foam in a sanitizer; and saturating the foam with the sanitizer.

## Description

### BACKGROUND

Exemplary embodiments pertain to the art of sanitizing covers for articles. In particular, this disclosure relates to sanitizing floor mats for use in vehicles such as aircraft.

Viruses and bacteria that spread infections are often transmitted through the air via a patient's breath, by hand contact with an infected patient, or both. However, it is often overlooked that viruses and bacteria can be transmitted by shoes. For example, if a person steps into contaminated water, bacteria or viruses can be transmitted via shoes worn by the person. It is therefore desirable to stop this mode of transmission especially in vehicles where numerous passengers congregate.

### BRIEF DESCRIPTION

Disclosed herein is a mat comprising a first foam layer; and a sanitizer; where the first foam layer is saturated with the sanitizer.

In an aspect, the mat has at least one surface that is at least 3 square feet in area.

In an aspect, the foam layer comprises a flexible polymer.

In another aspect, the mat comprises a second foam layer disposed under the first foam layer.

In yet another aspect, the first foam layer is separated from the second foam layer by an impermeable barrier.

In yet another aspect, the impermeable barrier comprises a polyamide, high density polyethylene, polyvinylchloride, or a combination thereof.

In yet another aspect, the foam comprises a thermoplastic polymer.

In yet another aspect, where the foam comprises a thermosetting polymer.

In yet another aspect, the foam comprises a biodegradable polymer.

In yet another aspect, the sanitizer is non-toxic and non-flammable.

In yet another aspect, the sanitizer is benzylkonium chloride.

In yet another aspect, the sanitizer is silanol.

In yet another aspect, the silanol is contained on silica particles.

In yet another aspect, the sanitizer is alcohol.

In yet another aspect, the sanitizer is present in the foam in an amount of at least 50 volume percent.

Disclosed herein too is a method of manufacturing a mat comprising immersing a foam in a sanitizer; and saturating the foam with the sanitizer.

In an aspect, the sanitizer is benzylkonium chloride.

In yet another aspect, the sanitizer is silanol.

In yet another aspect, the silanol is contained on silica particles.

In yet another aspect, the sanitizer is alcohol.

### BRIEF DESCRIPTION OF THE FIGURES

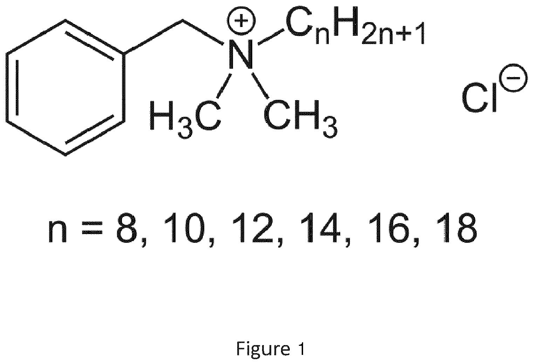

The Figure depicts a structure of benzylkonium chloride, where n can be an even number of 2 or greater.

### DETAILED DESCRIPTION

Disclosed herein is a mat that may be used at the entrances of rooms such as bathrooms, toilets, dispensaries, and the like; transport vehicles such as trains or aircraft, where numerous people enter and depart. The mat comprises a sanitizer that can destroy disease transmitting viruses and bacteria that are transmitted to the footwear. The mat can also transfer at least one monolayer of a sanitizer to the footwear to prevent transmission of the disease transmitting viruses and bacteria into the transport vehicles. Then at least one monolayer of disinfectant may further be transported by the user of the footwear to other parts of the room or transport vehicle to further disinfect the floor of the room or transport vehicle.

In an embodiment, the mat comprises a foam that is filled with the sanitizer. When a living being steps on the foam a portion of the sanitizer is deposited on the footwear of the living being. This sanitizer not only disinfects the footwear, it also is carried by the user and can disinfect other portions of the floor that the footwear contacts (i.e., that the living being tread on).

The foam is preferably an open cell foam that can absorb the sanitizer and discharges on being contacted by a force that is greater than atmospheric pressure. In other words, the foam preferably does not discharge any substantial amount of the sanitizer under gravitational force. The foam may contain some closed cells in addition to the open cells, but a majority of the cells are open cells. In an embodiment, the volume percentage of open cells is at least 80%, preferably at least 90%, based on the volume of the foam prior to immersing it in the sanitizer.

In an embodiment, the foam is reusable and can be infused with the sanitizer after the sanitizer is consumed during use. In another embodiment, the foam is a single use foam that is manufactured from a biodegradable polymer. Reusable foams preferably use a majority of organic polymer that is not biodegradable.

The foams are preferably flexible foams that have fairly high compressive stiffness. While it is desirable for the foam to be flexible it is preferable for the foam to offer a measure of resistance to compression. The resistance to compression ensures that the foam is not easily compressed, to prevent loss of substantial amounts of the sanitizer in a short amount of time.

In an embodiment, the density of the foam determines its ability to withstand the compressive force of a human being stepping on the mat. Foams can be rigid or flexible. In order for the foam to dispense with a portion of the sanitizer, it is desirable for the foam to have intermediate properties (such as density) range between those of a flexible foam and those of a rigid foam. Foams used in the mat typically have a density between 10 and 150 kilograms per cubic meter (kg/m³), preferably between 20 and 120 kg/m³, and more preferably between 30 and 100 kg/m³.

In an embodiment, the foam comprises an organic polymer. Organic polymers used in the foam may be selected from a wide variety of thermoplastic polymers, blends of thermoplastic polymers, thermosetting polymers, or blends of thermoplastic polymers with thermosetting polymers. The organic polymer may also be a blend of polymers, copolymers, terpolymers, or combinations comprising at least one of the aforementioned organic polymers. The organic polymer can also be an oligomer, a homopolymer, a copolymer, a block copolymer, an alternating block copolymer, a random polymer, a random copolymer, a random block copolymer, a graft copolymer, a star block copolymer, a dendrimer, a polyelectrolyte (polymers that have some repeat groups that contain electrolytes), a polyampholyte (a polyelectrolyte having both cationic and anionic repeat groups), an ionomer, or the like, or a combination comprising at least one of the foregoing organic polymers. The organic polymers have number average molecular weights greater than 10,000 grams per mole, preferably greater than 20,000 g/mole and more preferably greater than 50,000 g/mole.

Examples of thermoplastic polymers that can be used in the foam include polyacetals, polyacrylics, polycarbonates, polyalkyds, polystyrenes, polyolefins, polyesters, polyamides, polyaramides, polyamideimides, polyarylates, polyurethanes, epoxies, phenolics, silicones, polyarylsulfones, polyethersulfones, polyphenylene sulfides, polysulfones, polyimides, polyetherimides, polytetrafluoroethylenes, polyetherketones, polyether ether ketones, polyether ketone ketones, polybenzoxazoles, polyoxadiazoles, polybenzothiazinophenothiazines, polybenzothiazoles, polypyrazinoquinoxalines, polypyromellitimides, polyguinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, polypropylenes, polyethylenes, polyethylene terephthalates, polyvinylidene fluorides, polysiloxanes, or the like, or a combination thereof.

Examples of polyelectrolytes are polystyrene sulfonic acid, polyacrylic acid, pectin, carrageenan, alginates, carboxymethylcellulose, polyvinylpyrrolidone, or the like, or a combination thereof.

Examples of thermosetting polymers suitable for use in the foam include epoxy polymers, unsaturated polyester polymers, polyimide polymers, bismaleimide polymers, bismaleimide triazine polymers, cyanate ester polymers, vinyl polymers, benzoxazine polymers, benzocyclobutene polymers, acrylics, alkyds, phenol-formaldehyde polymers, novolacs, resoles, melamine-formaldehyde polymers, urea-formaldehyde polymers, hydroxymethylfurans, isocyanates, diallyl phthalate, triallyl cyanurate, triallyl isocyanurate, unsaturated polyesterimides, or the like, or a combination thereof.

Examples of blends of thermoplastic polymers include acrylonitrile-butadiene-styrene/nylon, polycarbonate/acrylonitrile-butadiene-styrene, acrylonitrile butadiene styrene/polyvinyl chloride, polyphenylene ether/polystyrene, polyphenylene ether/nylon, polysulfone/acrylonitrile-butadiene-styrene, polycarbonate/thermoplastic urethane, polycarbonate/polyethylene terephthalate, polycarbonate/polybutylene terephthalate, thermoplastic elastomer alloys, nylon/elastomers, polyester/elastomers, polyethylene terephthalate/polybutylene terephthalate, acetal/elastomer, styrene-maleicanhydride/acrylonitrile-butadiene-styrene, polyether etherketone/polyethersulfone, polyether etherketone/polyetherimide polyethylene/nylon, polyethylene/polyacetal, or the like.

As noted above, the foam may be a single use foam. When the sanitizer is discharged from the foam, it is disposed of. Single use foams use biodegradable polymers. Suitable examples of biodegradable polymers are as polylactic-glycolic acid (PLGA), poly-caprolactone (PCL), copolymers of polylactic-glycolic acid and poly-caprolactone (PCL-PLGA copolymer), polyhydroxy-butyrate-valerate (PHBV), polyorthoester (POE), polyethylene oxide-butylene terephthalate (PEO-PBTP), poly-D,L-lactic acid-*p*-dioxanone-polyethylene glycol block copolymer (PLA-DX-PEG), or the like, or combinations thereof. Combinations of non-biodegradable polymers with biodegradable polymers may also be used in the foam.

The pores of the foam are of a size that produces capillary forces (when filled with the sanitizer) that do not destroy the pores while at the same time being operative to release the sanitizer when pressurized by the weight of an average living being (about 150 pounds (68kg)). The foams preferably have pores that range from 0.5 micrometers to 100 micrometers, preferably 1 micrometer to 50 micrometers, and more preferably 2 micrometers to 20 micrometers. The foam preferably has a porosity greater than or equal to 70 volume percent, preferably greater than or equal to 75 volume percent, and more preferably greater than or equal to 80 volume percent.

The sanitizer is a non-toxic, non-flammable, non-solubilizing (to the foam) liquid that is easily absorbed by the foam and is easily discharged in the requisite quantities when the foam is stepped on (compressed) by an average living being.

The sanitizers preferably include alcohols (e.g., ethanol, n-propanol, isopropanol, or a combination thereof), silanols (SiOH), povidone-iodine, benzalkonium chloride, triclosan, or a combination thereof.

Alcohols are preferably diluted with adequate quantities of water in order to reduce flammability and to reduce irritability. Silanols can be diluted with water. Silica suspensions that contain silanols may also be used. Silica suspensions may be purchased from Nalco Chemical Company. The hydroxyl groups on a silanol may bond to the virus or bacteria thus immobilizing it.

Benzalkonium chloride is significantly more effective than alcohols at killing viruses and bacteria. It may be diluted with water or alcohol and used in the foam. The Figure depicts the structure of benzalkonium chloride, where n may have a value of 2 or greater. The number "n" is an even number having values of 2 to 18, preferably 4 to 16, and more preferably 6 to 12.

The sanitizer may be used in the foam in amounts of greater than 50 volume percent, preferably greater than 60 volume percent, and more preferably in amounts of greater than 70 volume percent.

In an embodiment, in one method of manufacturing the foam with the sanitizer, a foamed polymer of a desired porosity and density is immersed in a solution of the sanitizer till it is saturated with the sanitizer. Excess sanitizer may be dried off following which the foam (now saturated with the sanitizer) is ready for use on the floor of a room or a train or aircraft. The foam saturated with sanitizer (also referred to herein as a mat) may be placed near the entrance of a room or a transport carriage (e.g., train, bus, car or an aircraft) where a passenger will step on the mat. The footwear that impinges upon the mat will be coated with a layer of sanitizer. This will kill the bacteria or viruses present on the footwear.

It will also be transported to other parts of the train or aircraft and kill any preexisting bacteria, thus reducing the possibility of transmission to other passengers.

In an embodiment, the mat may comprise multiple layers of foam so that when a first layer of foam is expended, it can be removed thus exposing a second layer of foam, which may be used for a period of time after which it is removed. A third layer may then be exposed for use. The mat may be fitted with a non-slip backing or a self-adhesive backing to prevent undesirable motion on the floor. The first foam layer is disposed atop the second foam layer, which is disposed atop the third foam layer. Each foam layer may be separated from a succeeding foam layer by an impermeable barrier, which prevents the transfer of sanitizer from one layer to another.

The impermeable barrier may contain a polyamide, high density polyethylene, polyvinylchloride, or the like.

The mat has at least one surface that is preferably at least 3 square feet (0.28m²) in area, preferably at least 4 square feet (0.37m²) in area, and more preferably at least 6 square feet (0.56m²) in area.

In one manner of using the mat, the mat infused with sanitizer is disposed on a floor. As living beings step on the mat and compress it, at least one monolayer of sanitizer is disposed on the feet or foot wear of the living being. This monolayer can then be transported to and disposed on other surfaces that the living being contacts, thus sanitizing surfaces that are remote to the mat.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

**1.** A mat comprising:
a first foam layer;
a sanitizer; where the first foam layer is saturated with the sanitizer.

**2.** The mat of Claim 1, where the mat has at least one surface that is at least 3 square feet (0.28m²) in area.

**3.** The mat of Claim 1 or 2, where the first foam layer comprises a flexible polymer.

**4.** The mat of any preceding Claim, where the mat comprises a second foam layer disposed under the first foam layer.

**5.** The mat of Claim 4, where the first foam layer is separated from the second foam layer by an impermeable barrier, and optionally where the impermeable barrier comprises a polyamide, high density polyethylene, polyvinylchloride, or a combination thereof.

**5.** The mat of any preceding Claim, where the first foam layer comprises a thermoplastic polymer, and/or
where the first foam layer comprises a thermosetting polymer.

**6.** The mat of any preceding Claim, where the first foam layer comprises a biodegradable polymer.

**7.** The mat of any preceding Claim, where the sanitizer is non-toxic and non-flammable, optionally
wherein the sanitizer is benzylkonium chloride.

**8.** The mat of any of Claims 1 to 7, where the sanitizer is silanol, and optionally
where the silanol is contained on silica particles.

**9.** The mat of any of Claims 1 to 6, where the sanitizer is alcohol.

**10.** The mat of any preceding Claim, where the sanitizer is present in the mat in an amount of at least 50 volume percent.

**11.** A method of manufacturing a mat comprising:
immersing a foam in a sanitizer; and
saturating the foam with the sanitizer.

**12.** The method of Claim 11, wherein the sanitizer is benzylkonium chloride.

**13.** The method of Claim 11, wherein the sanitizer is silanol.

**14.** The method of Claim 13, wherein the silanol is contained on silica particles.

**15.** The method of Claim 11, wherein the sanitizer is alcohol.
